# EUROPEAN PATENT APPLICATION

(11) **EP 2 727 864 A1**
(43) Date of publication of application: **07.05.2014**
(21) Application number: 13190466.6
(22) Date of filing: 28.10.2013
(51) Int. Cl.: B65G 59/10, A61G 12/00, B62B 3/00, G07F 17/00, B65G 65/00

(54) **Drug gathering apparatus**

(30) Priority: 01.11.2012 KR 20120123150; 04.07.2013 KR 20130078286
(71) Applicant: JVM Co., Ltd., Daegu 704-947 (KR)
(72) Inventor: Kim, Jun Ho, 706-822 Daegu (KR)
(74) Representative: Dantz, Jan Henning

(57) **Abstract**

The drug gathering apparatus (10) includes a cart accommodation unit in which a drug transfer cart is accommodated, a drug introduction hole (14) through which at least one drug is introduced from an external device, a supply unit (100) storing drug gathering units (30) that are in overlapping state, the supply unit (100) sequentially separating the overlapping drug gathering units (30) downward in order from the lowermost drug gathering unit, a transfer unit (200) transferring the discharged drug gathering unit (30) to the cart accommodation unit after the at least one drug introduced through the drug introduction hole (14) is accommodated into the drug gathering unit (30) discharged from the supply unit (100), and a cart-side elevation unit (440) elevating the drug gathering units (30) disposed within the cart accommodation unit up to a specific height of the drug transfer cart.

## Description

### CROSS-REFERENCE TO RELATED PATENT APPLICATION

This application claims the benefit of Korean Patent Application Nos. 10-2012-0123150 filed on November 1, 2012 and 10-2013-0078286 filed on July 4, 2013 in the Korean Intellectual Property Office, the disclosure of which is incorporated herein in its entirety by reference.

### BACKGROUND OF THE INVENTION

### 1. Field of the Invention

The present invention relates to a drug gathering apparatus, and more particularly, to a drug gathering apparatus in which a series of process for gathering drugs dispensed from an external device to transfer the drugs to a patient is simply or accurately performed to improve working efficiency.

### 2. Description of the Related Art

In general, a dose of drug according to a patient's prescription may include various kinds and types of drugs. The dose of drug classified according to the patient's prescription may be transferred to the patient in a state of being contained in a basket.

Drugs to be contained in one basket are gathered into one basket from boxes, in which various kinds of drugs are contained, according to kinds and numbers of drugs written on a patient prescription. The basket in which the corresponding drugs are gathered is transferred to the patient, and then, the patient takes the drugs gathered in the basket.

In conventional ways, to gather various drugs into one basket, medical experts such as pharmacists have to manually take drugs out of drug-containing bottles according to the patient's prescription. As a result, it is necessary to execute a confirmation work for redetermining accuracy in the gathering of the drugs.

There is possibility of occurrence of drug misadventure because it is difficult to secure accuracy in administration. Also, it takes a long time to gather drugs according to a patient's prescription because the gathering process is complicated to deteriorate working efficiency in addition to the possibility of the occurrence of the drug misadventure.

Thus, studies with respect to methods and technologies for improving accuracy and efficiency in the gathering of drugs for each unit dose according to the patient's prescription to provide convenience of users such as pharmacists and previously prevent drug misadventure from occurring are needed.

### SUMMARY OF THE INVENTION

The present invention provides a drug gathering apparatus which gathers drugs according to a patient prescription to easily accurately execute classification for each patient, hospital room, and hospital ward.

The present invention also provides a drug gathering apparatus which efficiently gathers and classifies drugs dispensed from an external device to simply a process for transferring the drugs to a patient and reduce possibility of an occurrence of drug misadventure.

The technical objects of the present invention are not limited to those described above, and it will be apparent to those of ordinary skill in the art from the following description that the present invention includes other technical objects not specifically mentioned herein.

According to an aspect of the present invention, there is provided a drug gathering apparatus including: a drug transfer cart; a cart accommodation unit in which the drug transfer cart is accommodated; a drug introduction hole through which at least one drug is introduced from an external device; a supply unit storing drug gathering units that are in overlapping state, the supply unit sequentially separating the overlapping drug gathering units downward in order from the lowermost drug gathering unit; and a transfer unit transferring the discharged drug gathering unit to the cart accommodation unit after the at least one drug introduced through the drug introduction hole is accommodated into the drug gathering unit discharged from the supply unit.

The supply unit may include: a rotation shaft; and a plurality of protrusions radially disposed around the rotation shaft at a predetermined distance, the plurality of protrusions being disposed around the rotation shaft at a predetermined angle to rotate about the rotation shaft, wherein the plurality of protrusions may discharge the lowermost supported drug gathering unit downward when the protrusions protruding toward the drug gathering unit rotate downward, the plurality of protrusions returning to the drug gathering units sequentially supporting the drug gathering units in order from the lowermost drug gathering unit.

The supply unit may be disposed on each of at least two sides including two sides facing each other of the drug gathering unit.

Each of the protrusions may include a roll contacting an edge of the drug gathering unit.

The drug gathering units may be respectively disposed vertically in the drug transfer cart, and the drug gathering apparatus may include a cart-side elevation unit elevating the drug gathering units disposed within the cart accommodation unit up to a specific height of the drug transfer cart.

The drug gathering apparatus may further include a cart-side seat unit on which the drug gathering units disposed within the cart accommodation unit are seated, the cart-side seat unit being elevated by the cart-side elevation unit.

The drug gathering apparatus may further include: an introduction-side seat unit on which the drug gathering unit discharged from the supply unit is seated; and an introduction-side elevation unit elevating the introduction-side seat unit.

The drug gathering apparatus may further include a damage prevention unit including an inclination formation part on which the drugs introduced through the drug introduction hole are seated when the drugs drop into the drug gathering unit.

The inclination formation part may have a downwardly curved surface.

The damage prevention unit may be separated outward from the drug gathering unit when ascending and may form an inclination within the drug gathering unit when descending.

The drug gathering apparatus may further include a damage prevention unit elevation part elevating the damage prevention unit.

The damage prevention unit may include: an extension arm extending from the damage prevention unit elevation part, the extension arm being elevated by the damage prevention unit elevation part; a rotation shaft rotatably connecting the extension arm to the inclination formation part; and a cam part having a guide groove to guide an end of the rotation shaft downward and toward the drug introduction hole when the extension arm descends.

The damage prevention unit may include: a power transmission part; a driving shaft receiving rotation force from the power transmission part to rotate in a first direction or a second direction that is a reverse direction of the first direction; a driven shaft receiving the rotation force from the driving shaft to reversely rotate with respect to the rotation direction of the driving shaft to rotate between an upper portion of the driving shaft and an upper portion of the drug gathering unit; and a rotation arm having one end fixed to the driving shaft to rotate as the driving shaft rotates and the other end rotatably fixed to the driven shaft, wherein the inclination formation part may be fixed to the driven shaft to rotate as the driven shaft rotates, downwardly stands upright when the driven shaft is disposed above the driving shaft so as to be separated outward from the drug gathering unit, and may form a downward inclination when the driven shaft is disposed above the drug gathering unit.

The drug gathering apparatus may further include a hook pushed outward by an edge of the drug gathering unit when the drug gathering unit ascends to allow the drug gathering unit to pass therethrough, the hook supporting the edge of the drug gathering unit when the drug gathering unit descends to prevent the drug gathering unit from descending.

The hook may include: a hook member protruding to the inside of the drug transfer cart, the hook member rotating to the outside of the drug transfer cart; and an elastic member providing elastic force to allow the hook member to return in a reverse direction when the hook member rotates outward.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of a drug gathering apparatus according to an embodiment of the present invention;
FIG. 2 is an exploded perspective view of the drug gathering apparatus according to an embodiment;
FIGS. 3 and 4 are partial cutoff perspective views of the drug gathering apparatus according to an embodiment;
FIG. 5 is a perspective view of components related to elevation units of the drug gathering apparatus according to an embodiment;
FIG. 6 is a perspective view of a supply unit in a state where drug gathering units are stacked according to an embodiment;
FIG. 7 is a partial cutoff perspective view of the supply unit according to an embodiment;
FIG. 8 is a plan view of the drug gathering unit according to an embodiment;
FIG. 9 is a rear perspective view of the drug gathering unit according to an embodiment;
FIGS. 10 and 11 are schematic views of a state in which the supply unit discharges the drug gathering unit according to an embodiment;
FIGS. 12 to 26 are views illustrating successive processes in which the drug gathering unit gathers introduced drugs to transfer the gathered drugs to a drug transfer cart according to an embodiment;
FIGS. 27 and 28 are perspective views of a damage prevention unit according to another embodiment; and
FIG. 29 is a perspective view of a drug gathering apparatus including a drug transfer cart according to another embodiment.

### DETAILED DESCRIPTION OF THE INVENTION

Hereinafter, embodiments of the present invention will be described with reference to the accompanying drawings. If there is no specific definition or reference, the term representing a direction used in this description is on the basis of a state illustrated in the drawings. Also, the same reference numeral denotes the same member throughout embodiments. In the drawings, a thickness or size may be exaggerated for convenience of descriptions, but it does not mean that the thickness or size of each element does not entirely reflect an actual size.

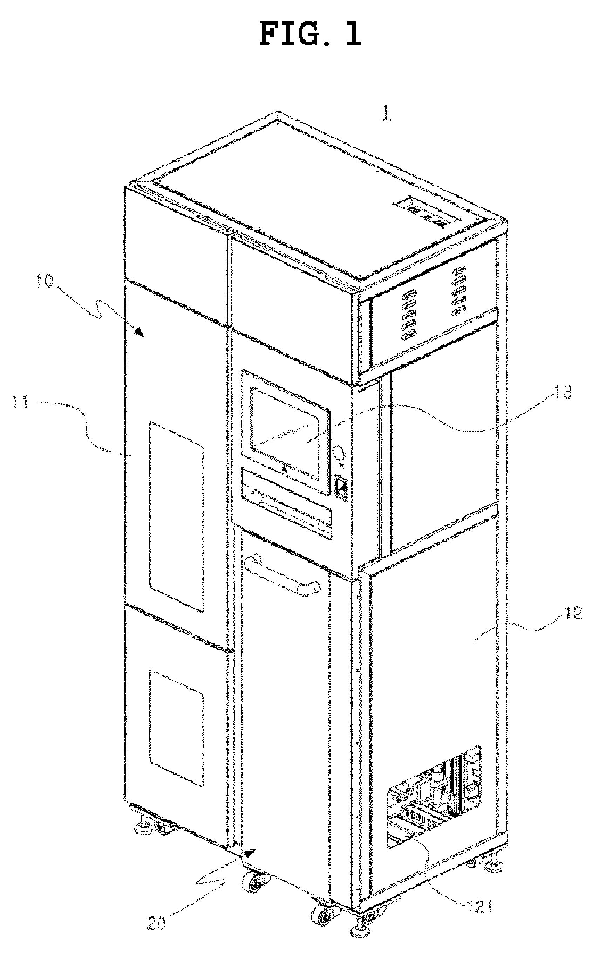

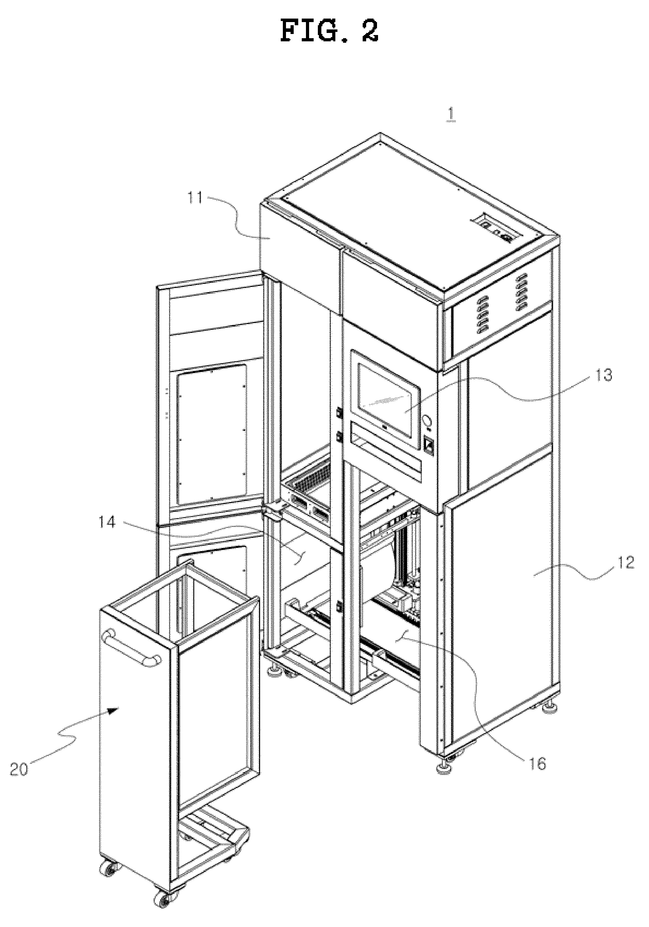

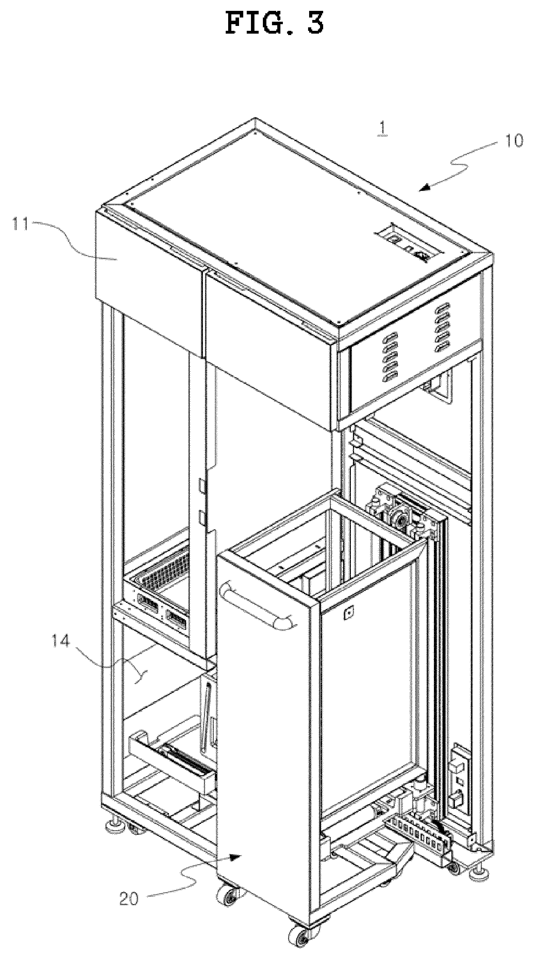

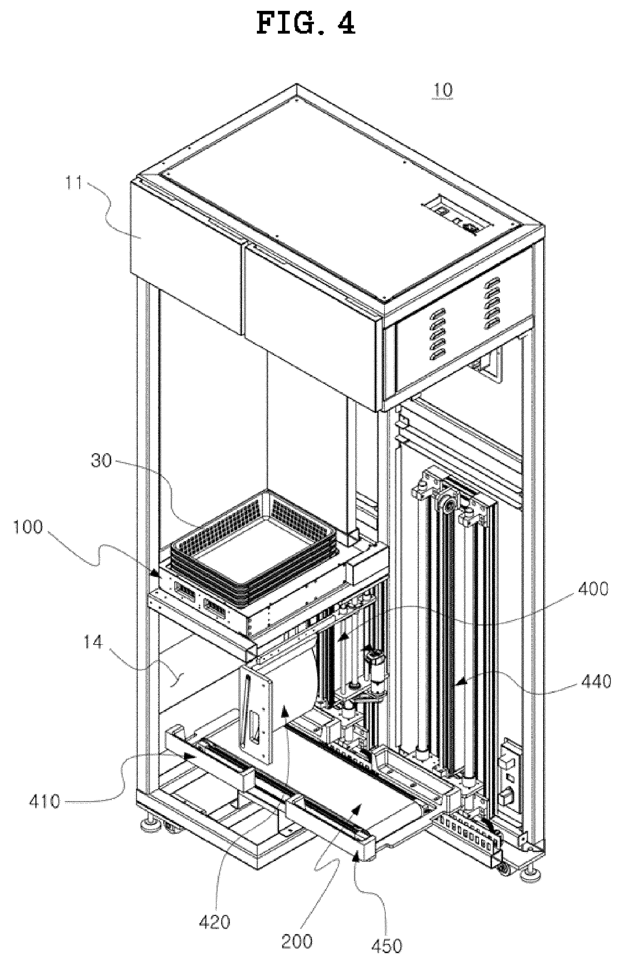

A drug gathering apparatus according to an embodiment of the present invention will be described with reference to FIGS. 1 to 4. FIG. 1 is a perspective view of a drug gathering apparatus according to an embodiment of the present invention, FIG. 2 is an exploded perspective view of the drug gathering apparatus according to an embodiment, and FIGS. 3 and 4 are partial cutoff perspective views of the drug gathering apparatus according to an embodiment.

Referring to FIG. 1, a drug gathering apparatus 1 according to an embodiment includes a gathering apparatus body 10 and a drug transfer cart 20. The gathering apparatus body 10 includes a housing 11 defining an outer appearance thereof, a display 13, and a housing side unit 12. The housing 11 defines the outer appearance of the gathering apparatus body 10. Also, the housing 11 may include the display 13 for displaying information with respect to a patient's prescription and information with respect to an overall system of the drug gathering apparatus 1. The housing side unit 12 is disposed on one side surface of the housing 11. The housing side unit 12 may have an opening 121 through which drugs are introduced from the outside as necessary. Alternatively, the housing side unit 12 may be provided with a cover for openably covering an opening that is previously formed.

Also, the drug transfer cart 20 may be provided in the gathering apparatus body 10. The drug transfer cart 20 may be accommodated into the gathering apparatus body 10. In detail, a cart accommodation unit for accommodating the drug transfer cart 20 may be formed within the housing 11 as shown in FIGS. 2 and 3. The cart accommodation unit 16 may be formed as a space part having a shape corresponding to that of the drug transfer cart 20.

The housing 11 has a drug introduction hole 14, through which drugs are introduced from the outside, in the other side of the housing side unit 12. The drug introduction hole 14 may be opened so that the inside of the housing 11 communicates with the outside.

As shown in FIG. 4, the gathering apparatus body 10 includes a supply unit 100, a cart-side seat unit 450, an introduction-side seat unit, 410, a cart-side elevation unit 440, an introduction-side elevation unit 400, a damage prevention unit 420, and a transfer unit 200 therein.

The supply unit 100 stores the stacked drug gathering units 30 and then successively discharges the drug gathering units 30 through a lower side thereof. Here, the drug gathering unit 30 may be a component for accommodating drugs and have a basket shape.

The cart-side seat unit 450 and the introduction-side seat unit 410 may respectively ascend or descend by the cart-side elevation unit 440 and the introduction-side elevation unit 400 to vertically transfer the drug gathering unit 30.

The damage prevention unit 420 may prevent the drugs introduced through the drug introduction hole 14 from being damaged when the drugs drop into the drug gathering unit 30 disposed above the introduction-side seat unit 410. That is, the damage prevention unit 420 seats the drugs on the drug gathering unit 30 while preventing the drugs from directly colliding with the drug gathering unit 30.

The transfer unit 200 transfers the drug gathering unit 30, in which the drugs introduced through the drug introduction hole 14 are accommodated, to the cart accommodation unit 16, i.e., the other side of the drug introduction hole 14.

Hereinafter, each of the above-described components will be described in detail.

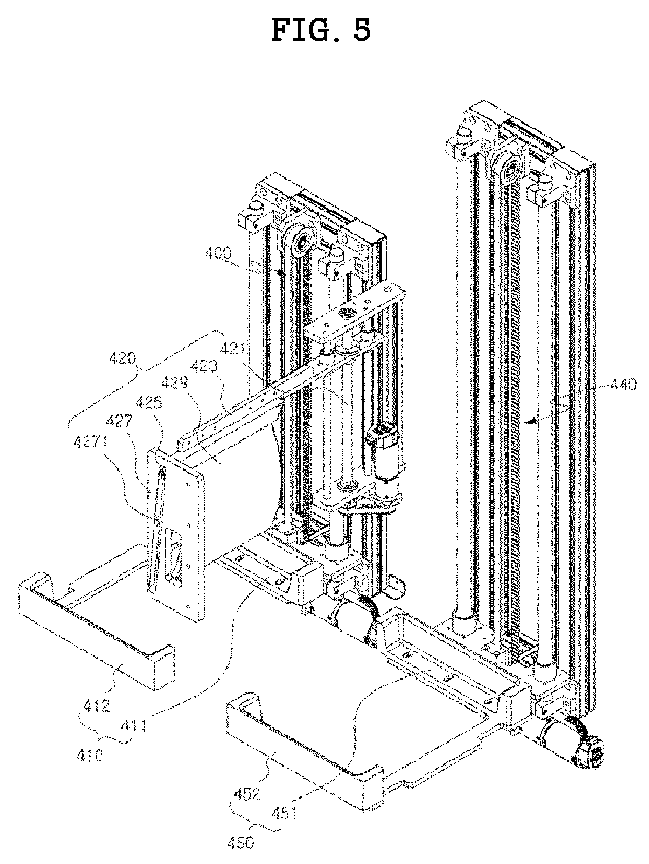

The elevation units and related components of the drug gathering apparatus according to an embodiment will be described with reference to FIG. 5. FIG. 5 is a perspective view of components related to elevation units of the drug gathering apparatus according to an embodiment.

The introduction-side elevation unit 400 elevates the introduction-side seat unit 410 by using a chain or belt. In detail, the introduction-side seat unit 410 includes an introduction-side seat unit boy 412 and an introduction-side seat part 411. The introduction-side seat unit body 412 may directly ascend or descend by the introduction-side elevation unit 400. The introduction-side seat part 411 that supports an edge portion of the drug gathering unit 30 to seat the drug gathering unit 30 thereon may be disposed on the introduction-side seat unit body 412.

Similarly, the cart-side elevation unit 440 elevates the cart-side seat unit 450 by using a chain or belt. In detail, the cart-side seat unit 450 includes a cart-side seat unit body 452 and a cart-side seat part 451. The cart-side seat unit body 452 may directly ascend or descend by the cart-side elevation unit 440. The cart-side seat part 451 that supports the edge portion of the drug gathering unit 30 to seat the drug gathering unit 30 thereon maybe disposed on the cart-side seat unit body 452.

The damage prevention unit 420 includes a damage prevention unit elevation part 421, an extension arm 423, a rotation shaft 425, a cam part 427, and an inclination formation part 429.

The extension arm 423 may ascend or descend by the damage prevention unit elevation part 421 in a state where the extension arm 423 is elevatably fixed to the damage prevention unit elevation part 421. The rotation shaft 425 is disposed on a lower end of the extension arm 423. The inclination formation part 429 is rotatably fixed to the rotation shaft 425.

The cam part 427 is disposed on an end of the rotation shaft 425. The cam part 427 has a guide groove 4271 that accommodates and guides the end of the rotation shaft 425. The guide groove 4271 guides the rotation shaft 425 toward the above-described drug introduction hole when the rotation shaft 425 descends.

As the extension arm 423 descends, a lower end of the inclination formation part 429 may be pushed toward the drug introduction hole to move. Here, the inclination formation part 429 may have a downwardly protruding curved surface to minimize friction force with respect to the drug gathering unit 30 and an impact of the introduced drugs.

In a state of a structure in which drugs are further introduced from the other side of the damage prevention unit 420 with respect to the cart-side seat unit 450, the damage prevention unit 420 may be additionally provided on the other side of the cart-side seat unit 450 to prevent drugs introduced through the other side of the cart-side seat unit 450 from being damaged.

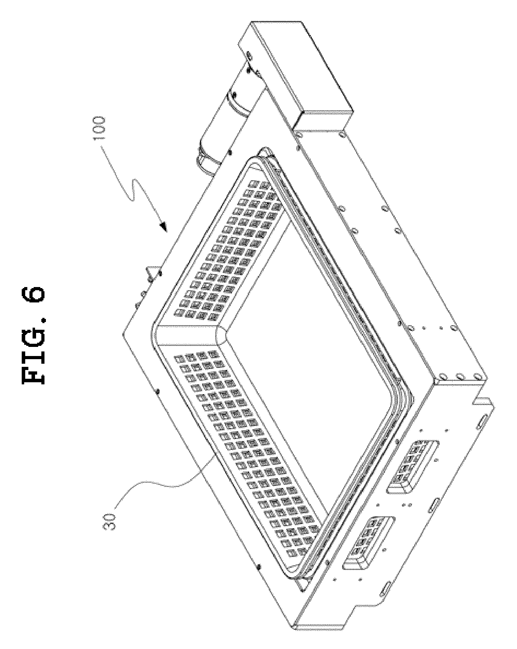

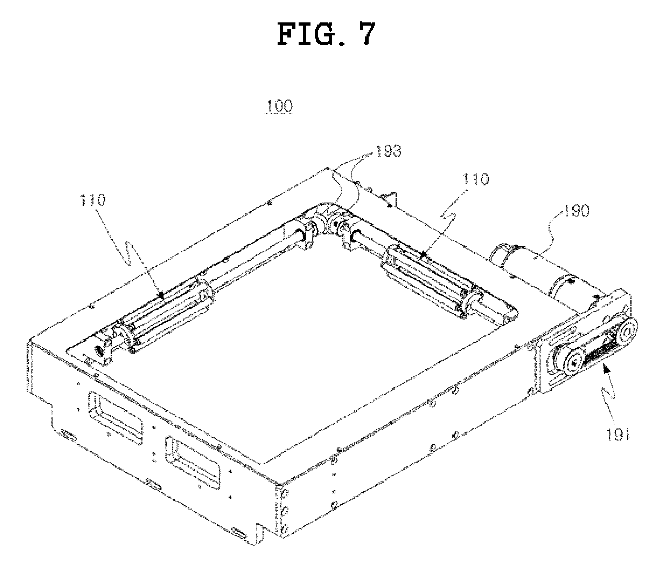

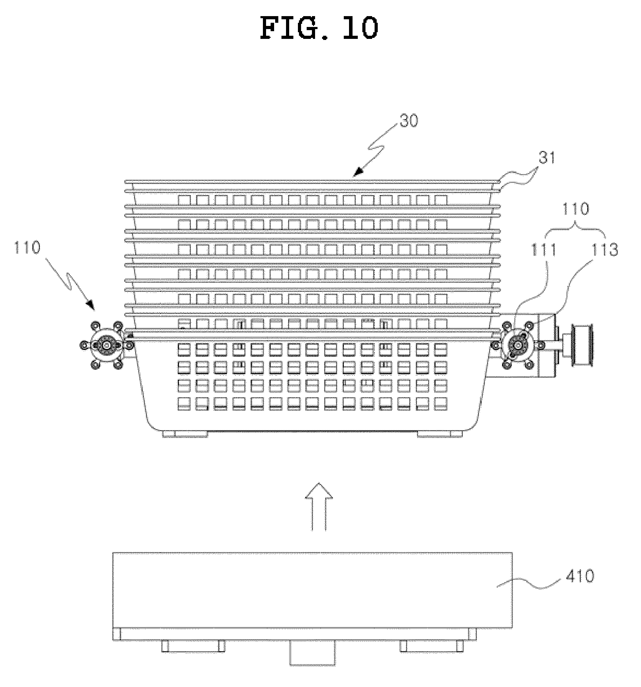

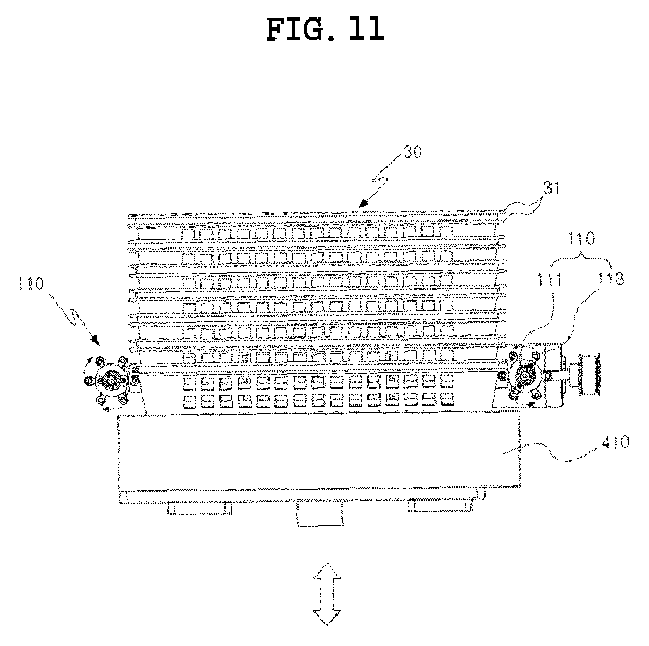

The supply unit according to an embodiment will be described with reference to FIGS. 6 to 11. FIG. 6 is a perspective view of a supply unit in a state where the drug gathering units are stacked according to an embodiment, FIGS. 7 to 9 are a partial cutoff perspective view, a plan view, and a rear perspective view of the supply unit according to an embodiment, and FIGS. 10 and 11 are schematic views of a state in which the supply unit discharges the drug gathering unit according to an embodiment.

Referring to FIG. 6, a plurality of drug gathering units 30 are stored within the supply unit 100 in a state where the plurality of drug gathering units 30 are stacked on each other. The supply unit 100 may sequentially discharge the stacked drug gathering units 30 downward in order from the lowermost drug gathering unit 30.

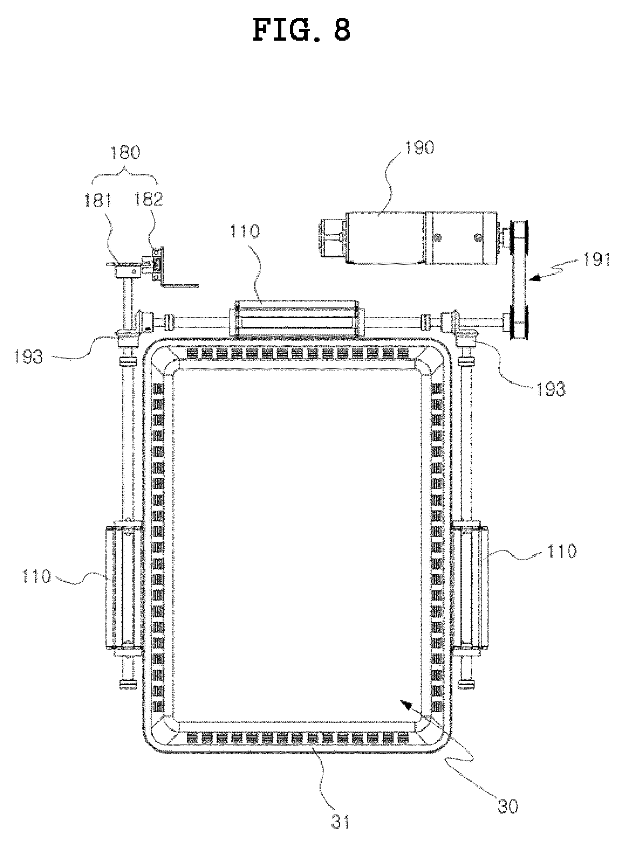

Referring to FIGS. 7 and 8, the supply unit 100 includes at least two discharge parts 110 on the edge portion of the drug gathering unit 30. The discharge parts 110 may be disposed on at least facing two sides of the drug gathering unit 30.

Each of the discharge parts 110 receives rotation force generated by a motor 190 through a power transmission part 191 to rotate. Also, the discharge parts 110 may be connected to each other by using a bevel gear to rotate together with each other.

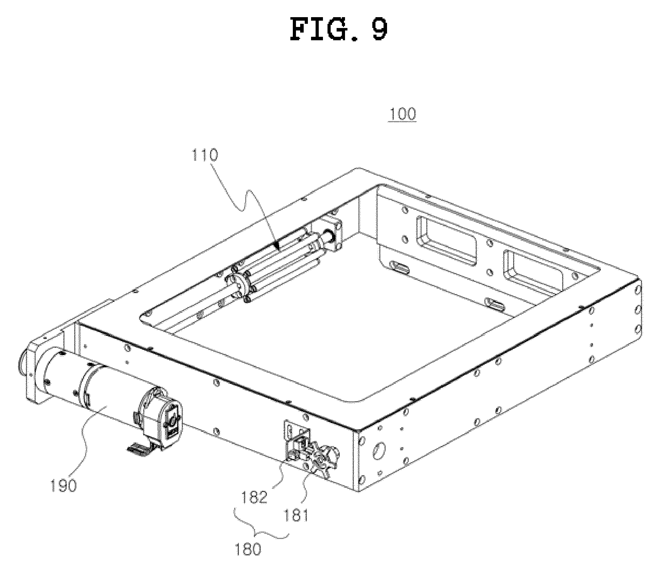

The discharge part 110 may discontinuously rotate. Here, various detection units may be provided to control rotation and stop of the discharge parts 110. For example, as shown in FIG. 9, a detection target unit 181 includes projections radially protruding from a rotation shaft thereof and a sensor unit 182 for detecting the approach of the corresponding projection. Various types of sensors may be used as the sensor unit 182. For example, an infrared sensor including a light emitting part and a light receiving part to detect the projection between the light emitting part and the light receiving part may be used as the sensor unit 182.

Referring to FIGS. 10 and 11, the discharge part 110 includes a rotation shaft 111 and protrusions 113. The protrusions 113 protrude from the rotation shaft 111 and are radially disposed around the rotation shaft 111 at a predetermined distance. That is, the protrusions 113 may be disposed around the rotation shaft 111 at a predetermined angle. Here, a roll or roller for reducing friction force may be disposed on an end of each of the protrusions 113.

The protrusion 113 of the discharge part 110, which is disposed on a side of the drug gathering unit 30 supports the lowermost drug gathering unit 30. Here, when the discharge part 110 rotates, the protrusion 113 returning to the drug gathering unit 30 supports the second drug gathering unit 30 from a lower side. Here, as the discharge part 110 rotates, the protrusion 113 supporting the lowermost drug gathering unit 30 may rotate downward to release and discharge the drug gathering unit 30 supported thereto.

The introduction-side seat unit 410 may be disposed under the drug gathering unit 30 before the drug gathering unit 30 is discharged. Referring to FIG. 11, the introduction-side seat unit 410 may descend again after the discharged drug gathering unit 30 is seated to move to a position at which the drugs introduced from the outside are seated.

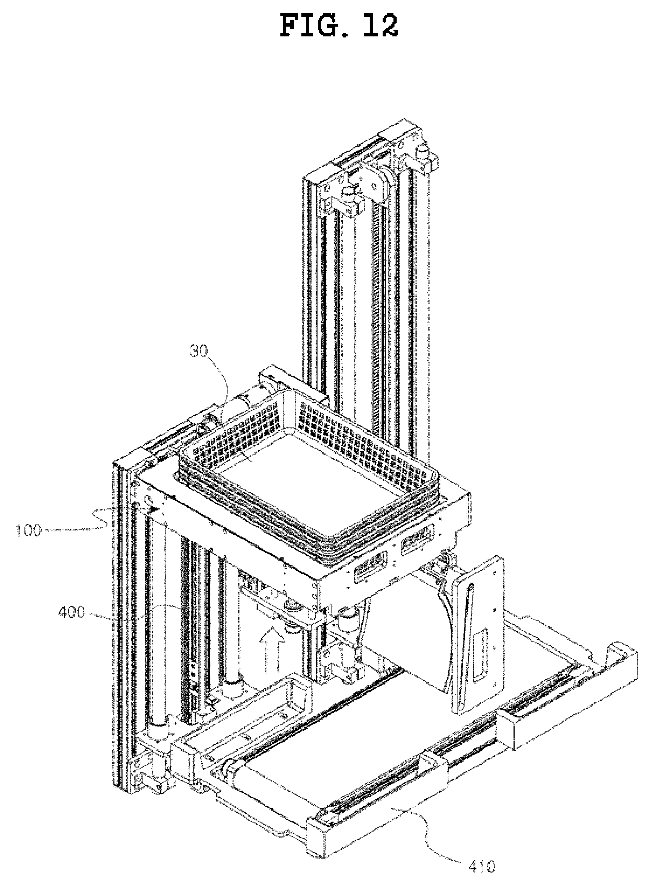

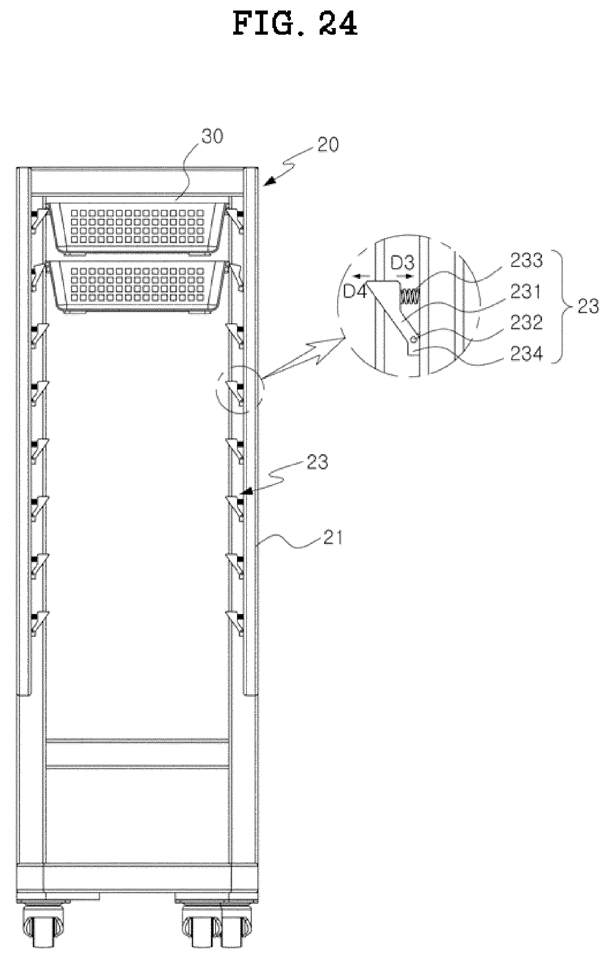

A process in which the drug gathering unit gathers introduced drugs to transfer the gathered drugs to the drug transfer cart and the drug transfer cart according to an embodiment will be described with reference to FIGS. 12 to 26. FIGS. 12 to 26 are views illustrating successive processes in which the drug gathering unit gathers introduced drugs to transfer the gathered drugs to the drug transfer cart according to an embodiment.

A process of gathering introduced drugs to transfer the gathered drugs to the drug transfer cart is as follows.

As shown in FIG. 12, the introduction-side seat unit 410 ascends through the introduction-side elevation unit 400 to approach a lower portion of the supply unit 100.

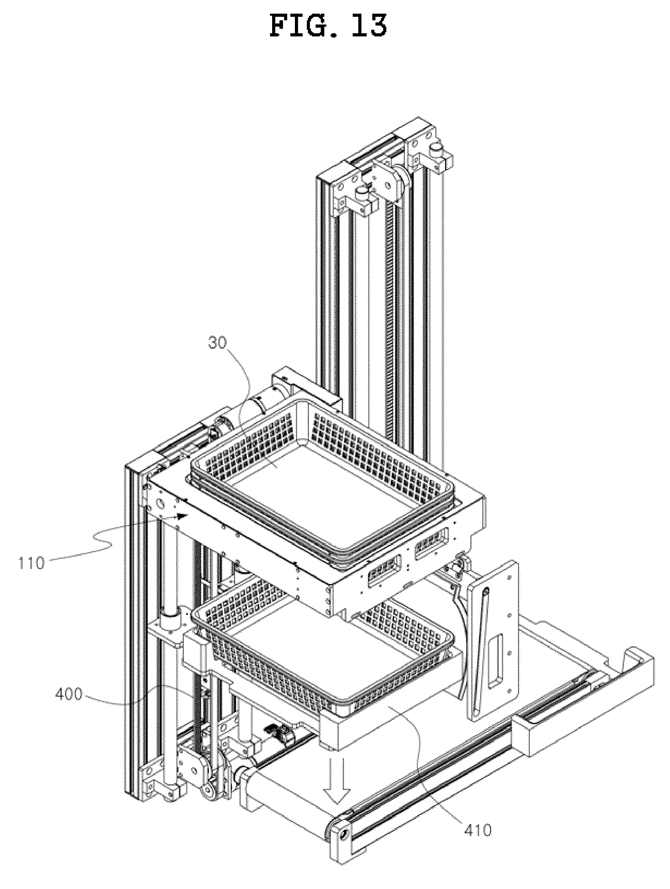

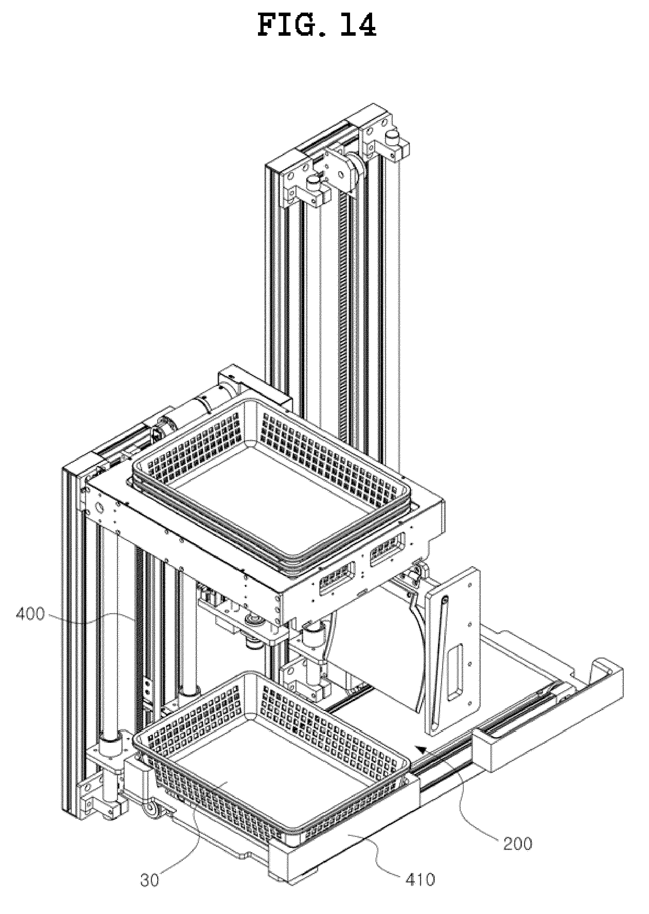

Next, as shown in FIG. 13, the lowermost drug gathering unit 30 is discharged and seated on the introduction-side seat unit 410, and then, the introduction-side seat unit 410 descends. As shown in FIG. 14, the drug gathering unit 30 descends until the drug gathering unit 30 is disposed above the transfer unit 200.

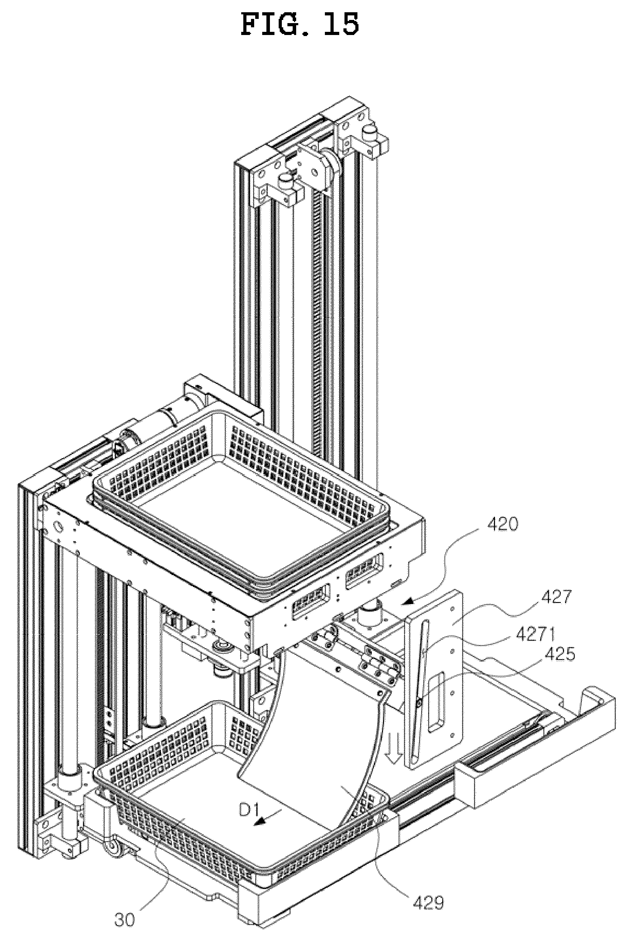

When the discharged drug gathering unit 30 is disposed above the transfer unit 200, the damage prevention unit 420 operates as described above. That is, as shown in FIG. 15, when the rotation shaft 425 descends along the guide groove 4271 of the cam part 427, the inclination formation part 429 forms an inclination while being pushed from the inside of the drug gathering unit 30 in a direction D1 in which the drugs are introduced.

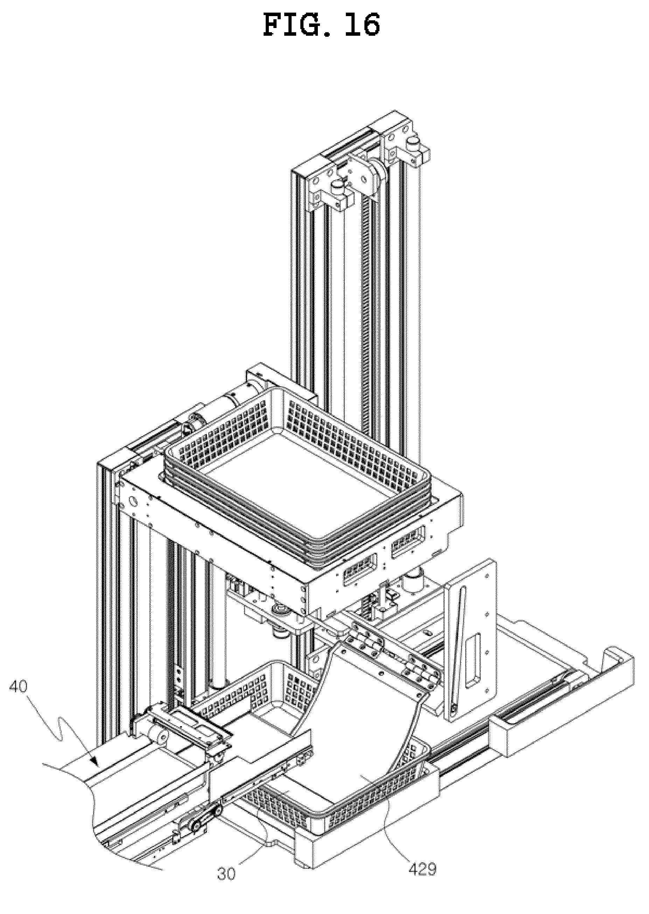

Next, as shown in FIG. 16, after an external device 40 is disposed above the drug gathering unit 30, the drugs are introduced into the drug gathering unit 30 from the external device 40. Here, the introduced drugs are seated on the inclination formation part 429 and then accommodated into the drug gathering unit 30. The introduced drugs may be mitigated in impact by the inclination formation part 429 to reduce possibility of damage. The drugs gathered one time may be drugs corresponding to one person's prescription or drugs corresponding to prescriptions for patients in one hospital room or one hospital ward. That is, the present invention is not limited to the number of drugs gathered one time, and thus, drugs may be classified and gathered through various methods according to a system management method.

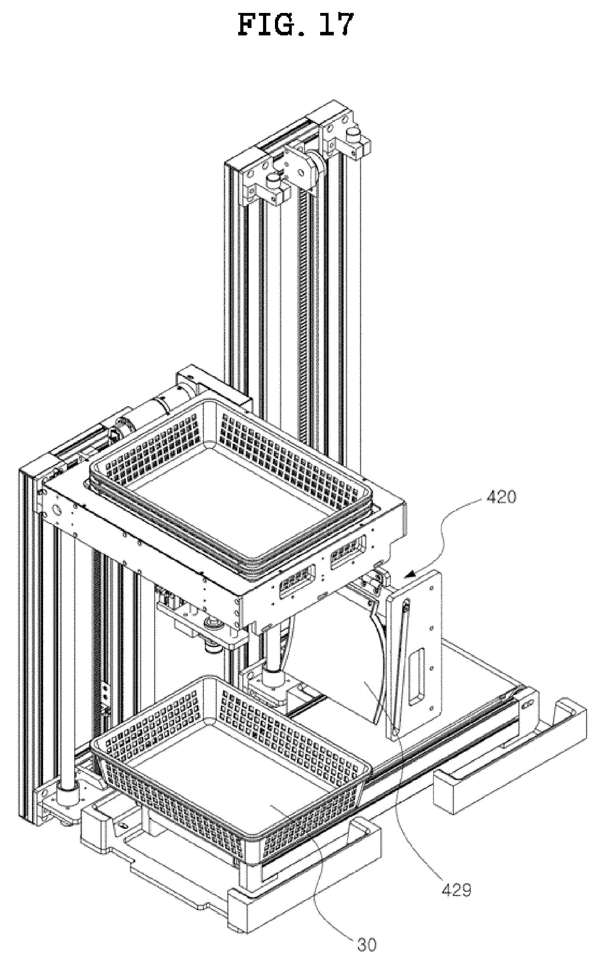

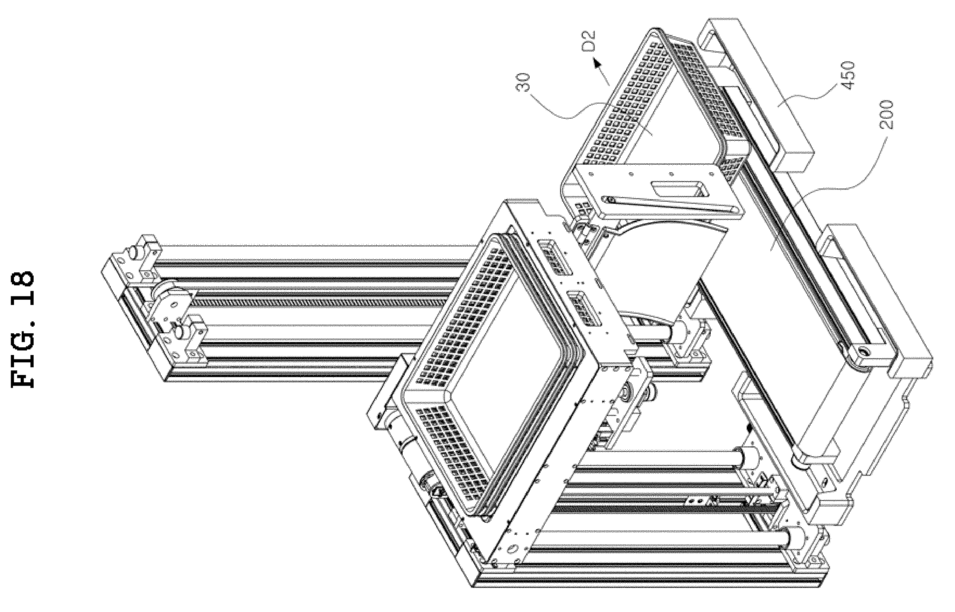

Then, as shown in FIG. 17, after the drugs are accommodated into the drug gathering unit 30, the inclination formation part 429 of the damage prevention unit 420 is separated from the drug gathering unit 30. Thereafter, as shown in FIG. 18, the transfer unit 200 transfers the drug gathering unit 30 in a direction of the cart accommodation unit 16, i.e., to an upper side of the cart-side seat unit 450.

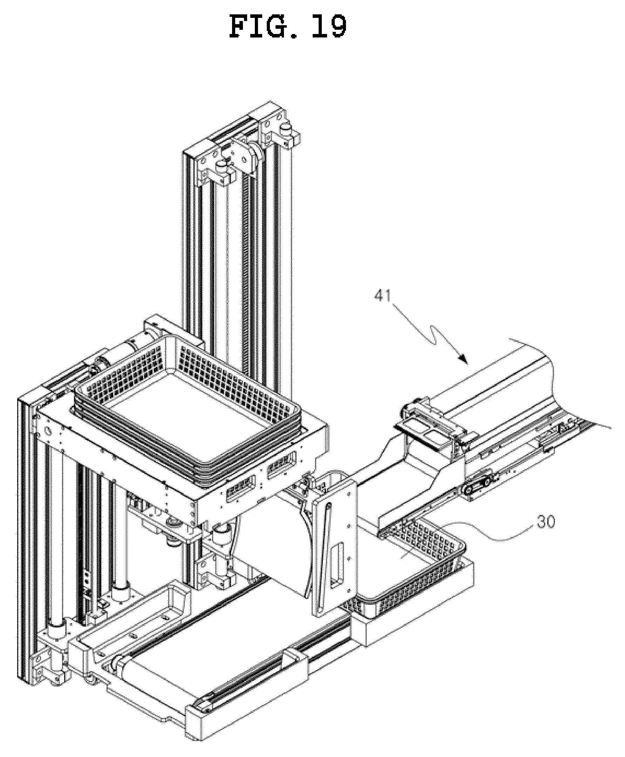

As necessary, as shown in FIG. 19, drugs may be received from the other external device 41. In this case, the drug gathering unit 30 may be disposed outside an operation range of the damage prevention unit 420. Thus, the introduced drugs to be packaged with a box may be drugs having low damage possibility.

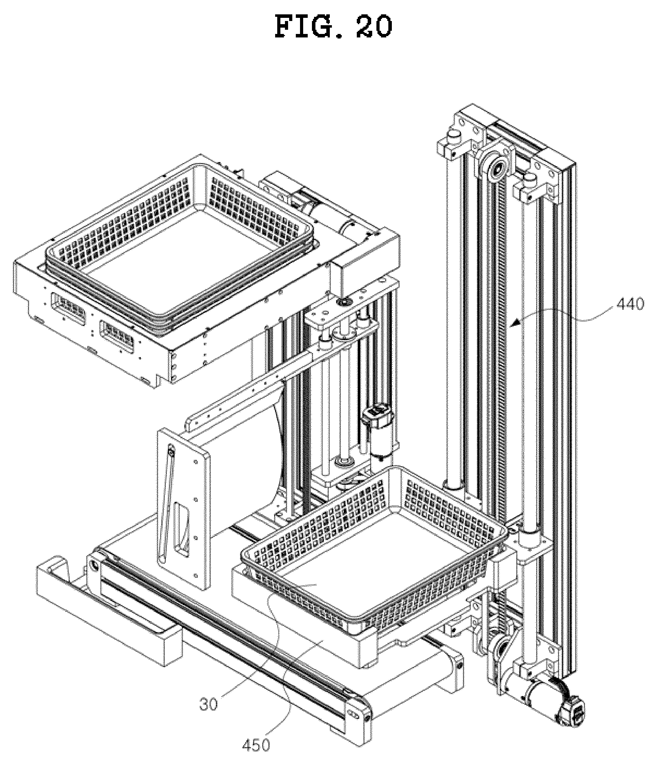

Next, as shown in FIG. 20, the cart-side seat unit 450 ascends to allow the drug gathering unit 30 disposed above the cart-side seat unit 450 to ascend. Here, the cart-side elevation unit 440 elevates the cart-side seat unit 450 up to a specific position.

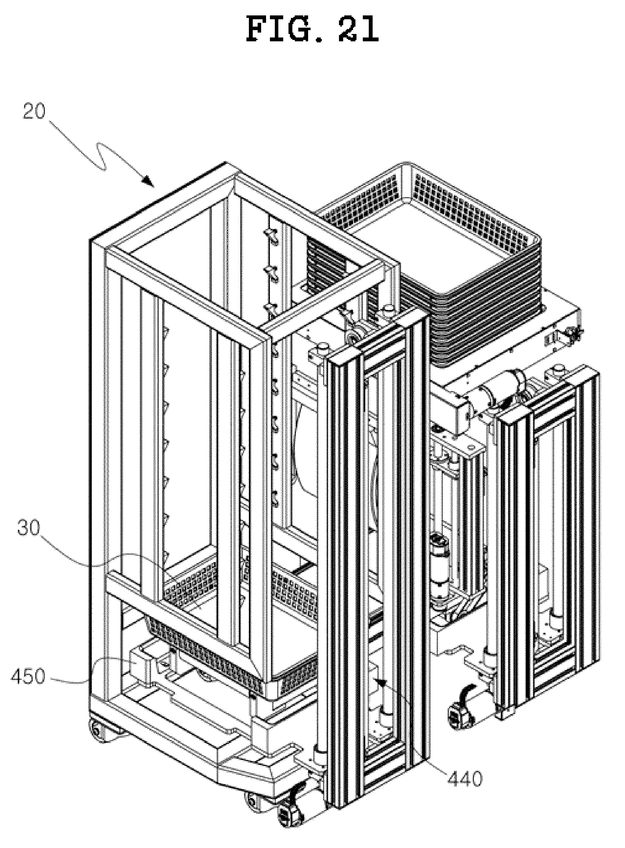

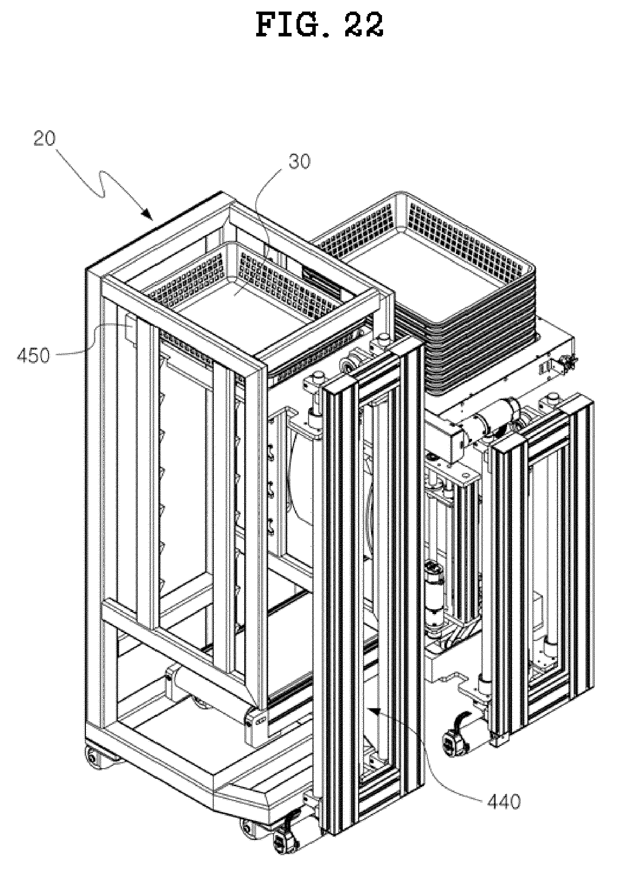

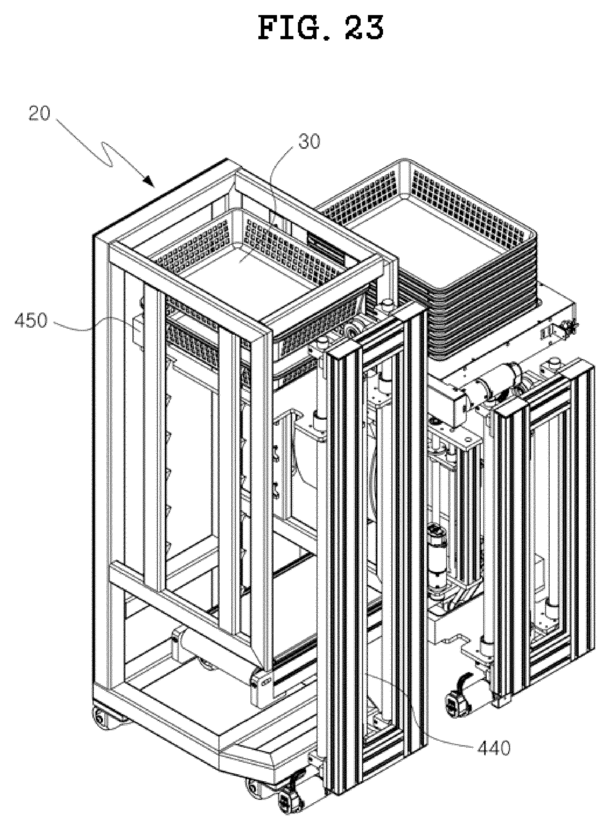

As shown in FIG. 21, the drug transfer cart 20 is accommodated above the cart-side seat unit 450, i.e., into the cart accommodation unit 16. As shown in FIG. 22, the cart-side elevation unit 440 elevates the cart-side seat unit 450 to elevate the drug gathering unit 30 up to a specific position within the drug transfer cart 20. Then, as shown in FIG. 23, the drug gathering units 30 are filled from the uppermost position of the drug transfer cart 20.

Here, a hook 23 is disposed along a moving path of the drug gathering unit 30 inside a cart frame 21 defining an outer appearance of the drug transfer cart 20. The hook 23 may restrict the drug transfer cart 22 so that the drug transfer cart 22 passes in one direction. In detail, a hook member 231 of the hook 23 rotates about a shaft 232 fixed to the cart frame 21. Here, a stopper 234 may contact the cart frame 21 to restrict the hook member 231 so that the hook member 231 rotates only toward the cart frame 21. That is, since the hook member 231 is pushed by an edge of the drug gathering unit 30 to rotate toward the cart frame 21 when the drug gathering unit 30 ascends, the hook member 231 may pass through the drug gathering unit 30. On the other hand, when the drug gathering unit 30 descends, the hook member 231 supports the edge of the drug gathering unit 30 to prevent the drug gathering unit 30 from further descending. An elastic part 233 having compressive elasticity is disposed between the hook member 231 and the cart frame 21. The elastic part 233 allows the hook member 231 to return to its original position by using elastic force thereof when the hook member 231 is pushed toward the cart frame 21.

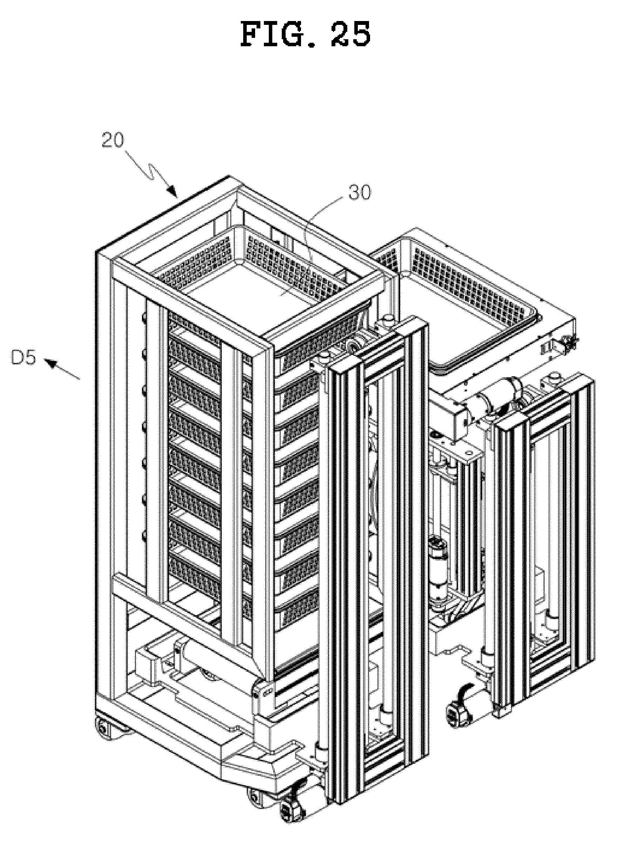

The drugs gathered into the drug gathering unit 30 may be accommodated into the drug transfer cart 20 through the above-described processes as shown in FIG. 25. The drug transfer cart 20 may be separated in one direction in the state where the drug transfer cart 20 accommodates the drug gathering units containing drugs.

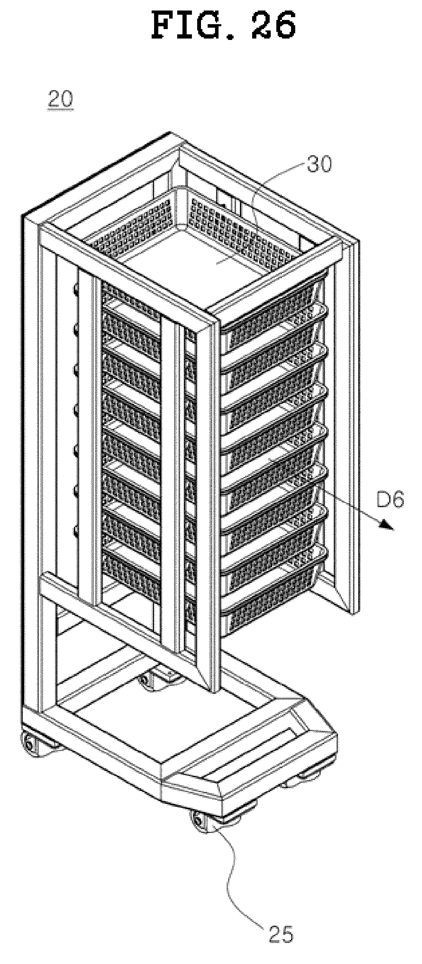

The drug transfer cart 20 is separated to move so as to transfer the drugs to each of patients. As shown in FIG. 26, the drug transfer cart 20 may be movable by using a wheel 25. Also, after the drug transfer cart 20 reaches a patient, the drug gathering unit 30 may be withdrawn in a withdrawal direction D6 to convey the drugs to the patient.

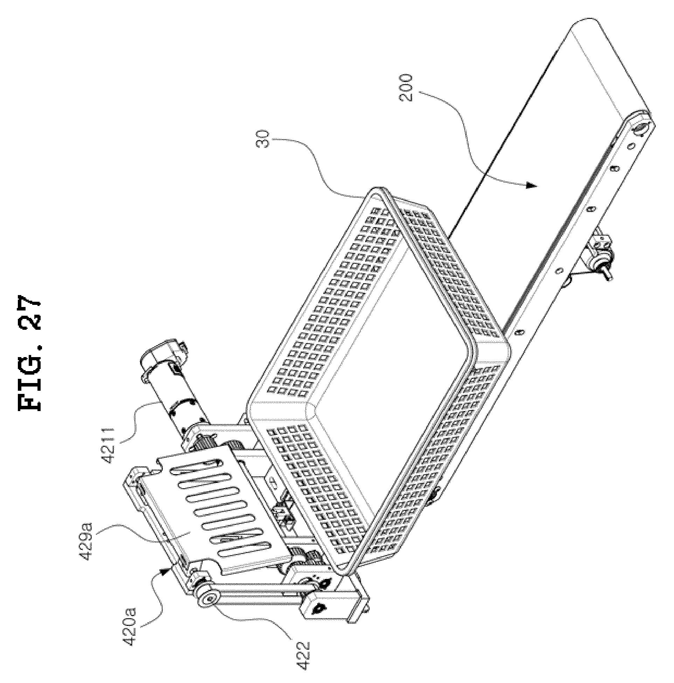

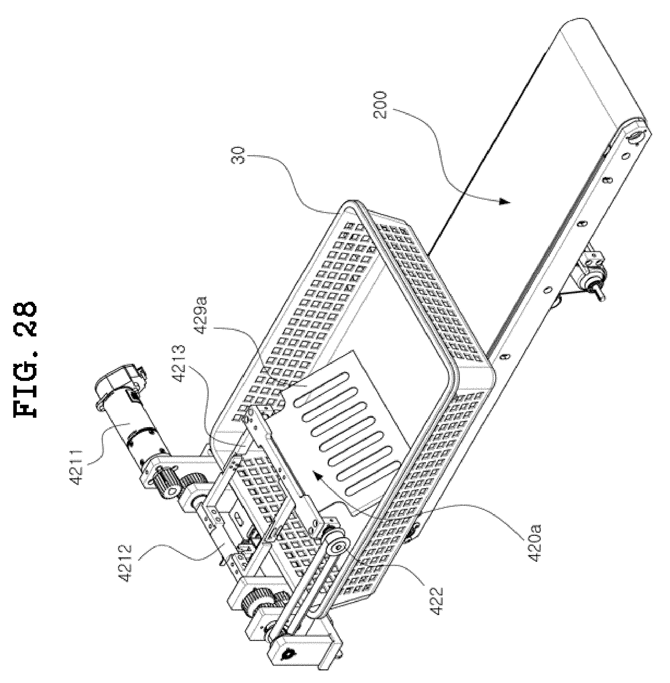

A damage prevention unit according to another embodiment will be described with reference to FIGS. 27 and 28. FIGS. 27 and 28 are perspective views of a damage prevention unit according to another embodiment.

A damage prevention unit 420a according to the current embodiment is different from the above-described elevation-type damage prevention unit in that the damage prevention unit 420a rotatably operates.

The damage prevention unit 420a according to the current embodiment includes a power transmission part 4211, a driving shaft 4212, a driven shaft 422, a rotation arm 4213, and an inclination formation part 429a.

The driving shaft 4212 receives rotation force from the power transmission part 4211 to rotate in a first direction or a second direction that is a reverse direction of the first direction. Here, the rotation arm 4213 is fixed to the driving shaft 4212. Thus, as the driving shaft 4212 rotates, the rotation arm 4213 rotates between an upper portion of the driving shaft 4212 and an upper portion of a drug gathering unit 30.

The driven shaft 422 is rotatably fixed to the other side of the driving shaft 4212 of ends of the rotation arm 4213. Also, the driven shaft 422 is connected to the driving shaft 4212 by using a gear and a timing belt to receive the rotation force. Here, the driven shaft 422 rotates in a direction opposite to the rotation direction of the driving shaft 4212.

Thus, when the inclination formation part 429a rotates in a direction opposite to that of the rotation arm 4213, the rotation arm 4213 downwardly stands upright. Also, when the rotation arm 4213 rotates in a clockwise direction toward the drug gathering unit 30, the inclination formation part 429a rotates in a counterclockwise direction to form an inclination toward a bottom surface of the drug gathering unit 30.

The inclination formation part 429a according to the current embodiment may also minimize dropping impacts when the drugs are introduced from the outside. In the current embodiment, to secure an operation range of the damage prevention unit 420a, the drug gathering unit 30 may have a length direction parallel to that of a transfer unit 200.

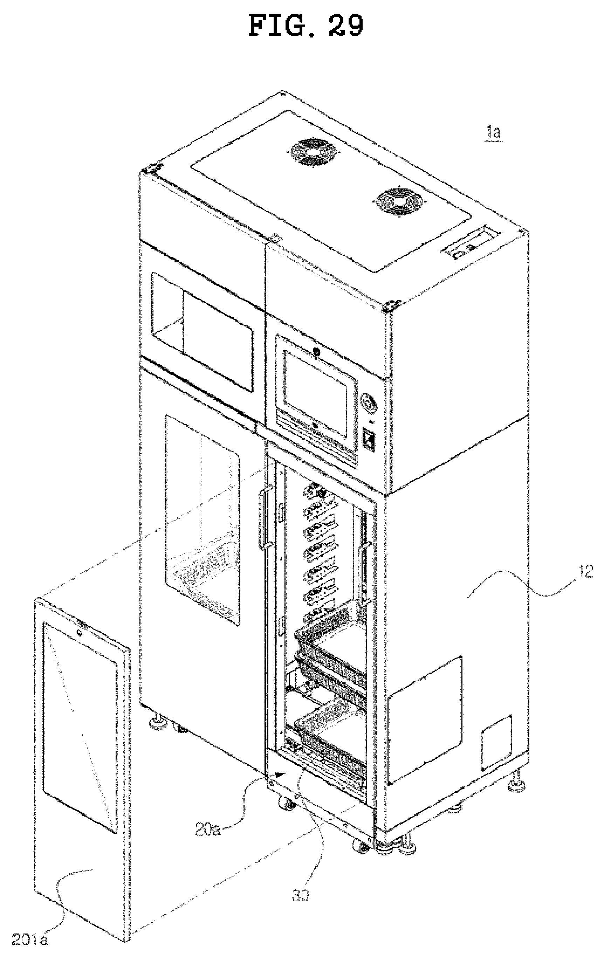

A drug transfer cart according to another embodiment will be described with reference to FIG. 29. FIG. 20 is a perspective view of a drug gathering apparatus including a drug transfer cart according to another embodiment.

A drug transfer cart 20a according to the current embodiment includes an openable cart door 201a. The cart door 201a may be provided in various types such as a hinge type or a separation type. The cart door 201a may be configured to withdraw the drug gathering units 30 that are stacked within the drug gathering cart 20a to the outside even though the drug transfer cart 20a is accommodated within a drug gathering apparatus 1a.

The drug gathering apparatus according to the present invention may gather drugs introduced by accurately repeatedly supplying the drugs dispensed from the external device to the drug gathering unit to maximize work efficiency.

Also, when drugs according to a patient's prescription are transferred, a separate process for classifying the gathered drugs may not be needed to simply the drug transfer process.

Although exemplary embodiments of the present invention are described, the technical spirit of the present invention is not limited to the above-described exemplary embodiments, and thus various drug gathering apparatus can be realized without departing form the spirit or scope of the invention.

## Claims

1. A drug gathering apparatus comprising:
a drug transfer cart;
a cart accommodation unit in which the drug transfer cart is accommodated;
a drug introduction hole through which at least one drug is introduced from an external device;
a supply unit storing drug gathering units that are in overlapping state, the supply unit sequentially separating the overlapping drug gathering units downward in order from the lowermost drug gathering unit; and
a transfer unit transferring the discharged drug gathering unit to the cart accommodation unit after the at least one drug introduced through the drug introduction hole is accommodated into the drug gathering unit discharged from the supply unit.

2. The drug gathering apparatus of claim 1, wherein the supply unit comprises:
a rotation shaft; and
a plurality of protrusions radially disposed around the rotation shaft at a predetermined distance, the plurality of protrusions being disposed around the rotation shaft at a predetermined angle to rotate about the rotation shaft,
wherein the plurality of protrusions discharge the lowermost supported drug gathering unit downward when the protrusions protruding toward the drug gathering unit rotate downward, the plurality of protrusions returning to the drug gathering units sequentially supporting the drug gathering units in order from the lowermost drug gathering unit.

3. The drug gathering apparatus of claim 2, wherein the supply unit is disposed on each of at least two sides including two sides facing each other of the drug gathering unit.

4. The drug gathering apparatus of claim 2, wherein each of the protrusions comprises a roll contacting an edge of the drug gathering unit.

5. The drug gathering apparatus of claim 1, wherein the drug gathering units are respectively disposed vertically in the drug transfer cart, and
the drug gathering apparatus comprises a cart-side elevation unit elevating the drug gathering units disposed within the cart accommodation unit up to a specific height of the drug transfer cart.

6. The drug gathering apparatus of claim 5, further comprising a cart-side seat unit on which the drug gathering units disposed within the cart accommodation unit are seated, the cart-side seat unit being elevated by the cart-side elevation unit.

7. The drug gathering apparatus of claim 1, further comprising:
an introduction-side seat unit on which the drug gathering unit discharged from the supply unit is seated; and
an introduction-side elevation unit elevating the introduction-side seat unit.

8. The drug gathering apparatus of claim 1, further comprising a damage prevention unit comprising an inclination formation part on which the drugs introduced through the drug introduction hole are seated when the drugs drop into the drug gathering unit.

9. The drug gathering apparatus of claim 8, wherein the inclination formation part has a downwardly curved surface.

10. The drug gathering apparatus of claim 8, wherein the damage prevention unit is separated outward from the drug gathering unit when ascending and forms an inclination within the drug gathering unit when descending.

11. The drug gathering apparatus of claim 8, further comprising a damage prevention unit elevation part elevating the damage prevention unit.

12. The drug gathering apparatus of claim 11, wherein the damage prevention unit comprises:
an extension arm extending from the damage prevention unit elevation part, the extension arm being elevated by the damage prevention unit elevation part;
a rotation shaft rotatably connecting the extension arm to the inclination formation part; and
a cam part having a guide groove to guide an end of the rotation shaft downward and toward the drug introduction hole when the extension arm descends.

13. The drug gathering apparatus of claim 10, wherein the damage prevention unit comprises:
a power transmission part;
a driving shaft receiving rotation force from the power transmission part to rotate in a first direction or a second direction that is a reverse direction of the first direction;
a driven shaft receiving the rotation force from the driving shaft to reversely rotate with respect to the rotation direction of the driving shaft to rotate between an upper portion of the driving shaft and an upper portion of the drug gathering unit; and
a rotation arm having one end fixed to the driving shaft to rotate as the driving shaft rotates and the other end rotatably fixed to the driven shaft,
wherein the inclination formation part is fixed to the driven shaft to rotate as the driven shaft rotates, downwardly stands upright when the driven shaft is disposed above the driving shaft so as to be separated outward from the drug gathering unit, and forms a downward inclination when the driven shaft is disposed above the drug gathering unit.

14. The drug gathering apparatus of claim 13, further comprising a hook pushed outward by an edge of the drug gathering unit when the drug gathering unit ascends to allow the drug gathering unit to pass therethrough, the hook supporting the edge of the drug gathering unit when the drug gathering unit descends to prevent the drug gathering unit from descending.

15. The drug gathering apparatus of claim 12, wherein the hook comprises:
a hook member protruding to the inside of the drug transfer cart, the hook member rotating to the outside of the drug transfer cart; and
an elastic member providing elastic force to allow the hook member to return in a reverse direction when the hook member rotates outward.
